# FASCICULE DE BREVET EUROPEEN

(11) **EP 1 393 996 B1**
(45) Date de publication et mention de la délivrance du brevet: **19.07.2006**
(21) Numéro de dépôt: 03292106.6
(22) Date de dépôt: 27.08.2003
(51) Int. Cl.: B60R 21/20

(54) **Système de commutation à bascule**
Kippschaltersystem
Rocker switch system

(30) Priorité: 28.08.2002 FR 0210668
(43) Date de publication de la demande: 03.03.2004
(73) Titulaire: SC2N, 78180 Montigny-le-Bretonneux (FR)
(72) Inventeur: Hallet, Michel, 14320 Clinchamps sur Orne (FR)
(74) Mandataire: Texier, Christian

(56) Documents cités:
- EP-A- 0 823 362
- EP-A- 1 153 808
- DE-A- 19 908 385
- GB-A- 2 270 657

## Description

L'invention concerne les systèmes de commutation situés autour de volume utile, en particulier autour des volumes utiles contenant des coussins gonflables intégrés dans le haut de colonne de direction d'un véhicule automobile.

Actuellement, par exemple, pour activer la fonction avertisseur située dans le moyeu du volant, on appuie sur n'importe quel endroit de la paroi derrière laquelle se trouve un volume utile situé dans le moyeu et comprenant un coussin gonflable. L'appui sur la paroi fait que cette dernière pousse sur le coussin gonflable qui transmet l'appui à des zones de contactage situées de l'autre côté dudit volume utile comprenant le coussin gonflable par rapport à ladite paroi. Le coussin gonflable est monté sur une série de ressorts de suspension qui assurent l'ouverture des contacts des zones de contactage lors du relâchement de l'appui sur la paroi.

L'évolution actuelle des coussins gonflables de haut de colonne conduit à obtenir des coussins gonflables de plus en plus volumineux qui demandent de ce fait un volume utile pour les contenir de plus en plus important au niveau du volant. Ceci a pour conséquence une implantation de plus en plus difficile voire impossible des ressorts de suspension et des zones de contactage en arrière du coussin gonflable comme précédemment décrit.

Le document EP-A-0823362 décrit un système de commutation comprenant une plaque supportée par l'intermédiaire de trois gorges par un support élastique. La plaque recouvre trois moyens de contactage équi-répartis autour de l'axe de l'arbre de direction.

Un but de l'invention est de fournir un système de commutation simple pouvant être facilement implanté dans le voisinage d'un volume utile, sans empiéter sur celui-ci.

A cet effet, on prévoit, selon l'invention, un système de commutation situé dans le voisinage d'un volume utile contenu dans des moyens de réception, notamment pour un véhicule automobile, comprenant un moyen d'actionnement apte à couvrir au moins en partie les moyens de réception et au moins une zone de contactage située dans le voisinage des moyens de réception, le moyen d'actionnement étant agencé de sorte à être apte à agir directement sur la zone de contactage, caractérisé par le fait que le moyen d'actionnement est relié au moyen de réception par des moyens d'articulation situés au niveau d'un premier bord du moyen d'actionnement, le moyen d'actionnement comprennant des moyens de contactage aptes à agir dans la zone de contactage située au niveau d'un deuxième bord opposé au premier bord.

Ainsi, une telle structure permet de s'affranchir de l'utilisation du contenu du volume utile comme intermédiaire entre le moyen d'actionnement et les zones de contactage libérant ainsi de l'espace pour le volume utile (ou sans empiéter sur celui-ci tout en gardant une ergonomie de fonction mise en oeuvre par le système de commutation ainsi structurée très proche de l'ergonomie des systèmes de commutation de l'art antérieur précédemment décrit (bien connu des utilisateurs) tout en étant simple et facilement implantable.

Avantageusement mais facultativement, le système de commutation présente au moins l'une des caractéristiques suivantes :
- les moyens d'articulations sont une charnière ;
- les moyens d'articulations comprennent des moyens élastiques de rappel du moyeu d'actionnement à une position de repos ;
- les moyens de réception sont situés dans un haut de colonne ;
- les moyens de réceptions sont un moyeu de volant ;
- le volume utile est occupé par un coussin gonflable.

D'autres caractéristiques et avantages de l'invention apparaîtront lors de la description ci-après d'un mode préféré de réalisation. Aux dessins annexés :
- la figure 1 est une vue en coupe selon un diamètre d'un haut de colonne comprenant un mode de réalisation de l'invention ;
- la figure 2 est une coupe diamétrale d'un haut de colonne comprenant l'invention dans une position actionnée.

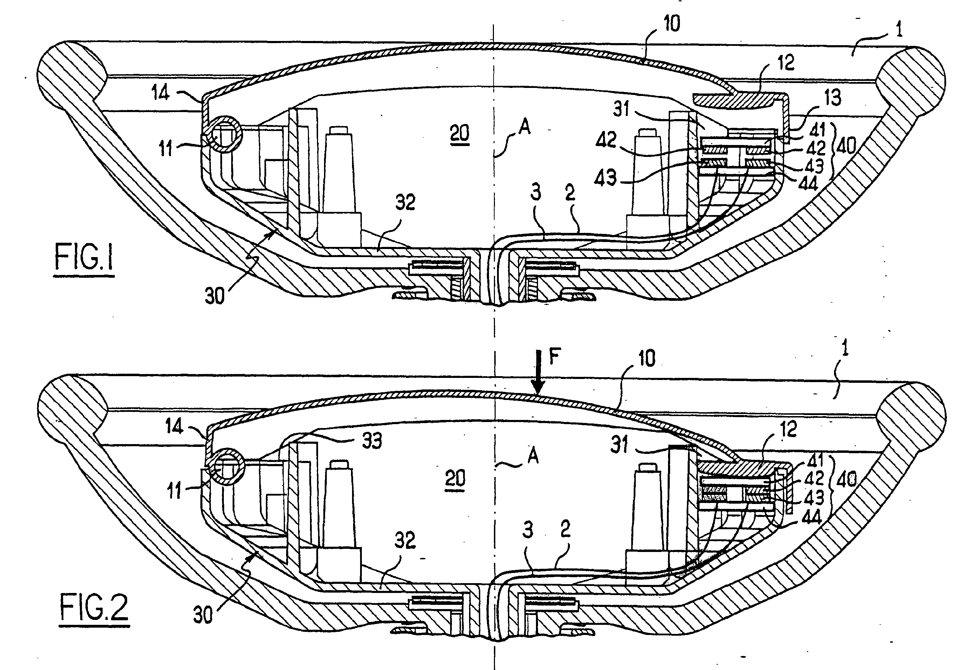

En référence à la figure 1, nous allons décrire un haut de colonne de direction d'un véhicule automobile comprenant l'invention.

Le haut de colonne de direction comprend un volant de direction 1 apte à tourner autour d'un axe A et comprend, au centre du volant 1, un moyeu 30 qui ici est fixe. Cela veut dire que, lorsque le volant est mis en rotation autour de l'axe A, le moyeu 30 reste immobile. Il est à noter que l'invention peut être mise en oeuvre dans le cadre d'un moyeu ayant le même mouvement de rotation que le volant.

Le moyeu 30 est composé d'un réceptacle 32 formant moyen de réception d'un volume utile 20. Le volume utile 20 est apte à recevoir un coussin gonflable de sécurité non représenté. Une paroi 10 est montée sur le réceptacle 32 de manière à recouvrir l'ensemble dudit réceptacle 32 et, donc, du volume utile 20. La paroi 10 présente un premier bord 14 au niveau duquel des moyens d'articulation 11 sont aménagés. Ces moyens d'articulations 11 permettent de relier la paroi 10 au réceptacle 32. De préférence les moyens d'articulation 11 sont une charnière. Cela permet de laisser libre à rotation selon l'axe de la charnière la paroi 10 par rapport au réceptacle 32. D'autre part, la paroi 10 présente un deuxième bord 13, ici à l'opposé du premier bord 14. Le bord 13 est libre et ne présente donc aucun moyen de liaison avec le réceptacle 32. Au niveau de ce bord 13, la paroi 10 comprend des moyens de contactage 12 qui sont aptes à agir sur une zone de contactage 40 que nous allons décrire.

Le réceptacle 32 présente une cavité périphérique 31. La cavité périphérique 31 reçoit, de manière préférentielle, une zone de contactage 40 installée ici en regard de moyens de contactage 12 de la paroi 10 lorsque celle-ci est montée sur le réceptacle 32. La zone de contactage 40 comprend un support 44 qui est monté fixe par rapport au réceptacle 32 dans la cavité périphérique 31. De manière préférentielle, ce support est en un matériau isolant. Sur une face supérieure, le support 44 présente deux plots conducteurs 43 séparés l'un de l'autre de manière électrique. Chacun des plots 43 est liés à un câble électrique 2 et 3 respectivement provenant d'un dispositif de mise en oeuvre d'une fonction que la zone de contactage est apte à piloter. Comme illustré ici à la figure 1, les deux câbles électriques 3 et 2 proviennent du moyeu de la colonne de direction. La zone de contactage 40 comprend un deuxième support mobile 41 de préférence réalisé dans un matériau conducteur. Le support mobile 41 présente sur une face inférieure deux plots conducteurs 42 qui sont mis en contact électrique l'un avec l'autre par le support mobile 41. Les plots 42 sont installés sur le support mobile 41 de manière à faire face aux plots 43 montés sur le support fixe 44. En position non actionnée telle qu'illustrée à la figure 1, le support mobile 41 est positionné de sorte à laisser un espace entre chaque paire de plots 42, 43. Pour cela, de manière préférentielle le support 41 est tenu éloigné, en position de repos, du support 44 par des moyens élastiques qui sont interposés entre les deux et non représentés ici. Il est à noter que l'ensemble formé par le support mobile 41 et les plots conducteurs 42 peut être remplacé par un seul support mobile et conducteur d'une seule pièce. Dans une autre variante de réalisation, le support mobile 41 peut être en matériau isolant et les deux plots 42 remplacés par une plaque de dimension équivalente au support mobile 41.

En référence à la figure 2, nous allons décrire le fonctionnement du système de commutation selon l'invention décrit précédemment.

Lorsque un utilisateur décide d'actionner la fonction piloter par le système de commutation selon l'invention, il exerce sur la paroi 10 une force d'appui F dirigée vers le réceptacle 32. Cette force d'appui F met en mouvement la paroi 10 par rapport au réceptacle 32 selon les moyens d'articulation 11. Ici, la plaque 10 tourne autour de l'axe de la charnière 11. Lors de ce mouvement, le moyen de contactage 12 de la paroi 10 pénètre dans la cavité périphérique 31 du réceptacle 32 et vient en contact avec le support mobile 41 de la zone de contactage 40. Le mouvement de la paroi 10 se poursuivant, les moyens élastiques interposés entre le support mobile 41 et le support fixe 44 sont déformés de sorte que le support mobile 41 se rapproche du support fixe 44 jusqu'à ce que chaque paire de plots 42, 43 entrent en contact l'un avec l'autre respectivement. Ainsi un chemin électrique est crée entre le câble 2 et le câble 3 laissant passer le courant d'un câble à l'autre et déclenchant le dispositif d'actionnement de la fonction à laquelle ils sont reliés. Lors du relâchement de l'effort F sur la paroi 10, les moyens d'articulations 11 comprenant de préférence des moyens élastiques déformés lors de l'appui précédemment décrit forcent la paroi 10 à revenir en position initiale de repos telle qu'illustrée à la figure 1. D'autre part, les moyens élastiques interposés entre le support mobile 41 et le support fixe 44 forcent le support mobile 41 à revenir à sa position initiale de repos telle qu'illustrée en figure 1 et déconnectant le câble 2 du câble 3 de manière électrique.

Bien entendu on peut apporter à l'invention de nombreuses modifications sans pour autant sortir du cadre de celle-ci. Notamment :
- le support mobile et les moyens de contactage 12 de la paroi 10 peuvent être liés l'un à l'autre ou formés une seule partie de la paroi 10.
- le réceptacle 32 peut présenté une deuxième cavité 33 située dans le voisinage des moyens d'articulation 11 et dans laquelle peut être aménagée la zone de contactage 40. De ce fait, les moyens de contactage 12 de la paroi 10 seront situés aussi au voisinage des moyens d'articulation 11.
- de manière générale, la cavité périphérique pouvant faire tout le tour du réceptacle 32, la zone de contactage peut être située n'importe où au sein de cette, cavité périphérique.

La présente invention s'applique en particulier à des hauts de colonne de direction pour véhicules automobiles comprenant un coussin gonflable fixe, c'est à dire un coussin gonflable porté par des moyens permettant de maintenir le coussin gonflable fixe dans l'espace, par rapport à la colonne de direction, et permettant par conséquent une libre rotation entre le volant et ledit coussin gonflable.

## Revendications

1. Système de commutation situé dans le voisinage d'un volume utile (20) contenu dans des moyens de réception (32), notamment pour un véhicule automobile, comprenant un moyen d'actionnement (10) apte à couvrir au moins en partie les moyens de réception et au moins une zone de contactage (40) située dans le voisinage (31, 32) des moyens de réception, le moyen d'actionnement étant agencé de sorte à être apte à agir directement sur la zone de contactage, **caractérisé en ce que** le moyen d'actionnement est relié au moyen de réception par des moyens d'articulation (11) situés au niveau d'un premier bord (14) du moyen d'actionnement, le moyen d'actionnement comprend des moyens de contactage (12) aptes à agir dans la zone de contactage située au niveau d'un deuxième bord (13), opposé au premier.

2. Système selon la revendication 1, **caractérisé en ce que** les moyens de réception sont situés dans un haut de colonne.

3. Système selon l'une des revendications 1 ou 2, **caractérisé en ce que** les moyens de réceptions sont un moyeu de volant.

4. Système selon l'une des revendications 1 à 3, **caractérisé en ce que** le volume utile (20) est occupé par un coussin gonflable.

5. Système selon l'une des revendications 1 à 4, **caractérisé en ce que** le moyen d'articulation est une charnière.

6. Système selon l'une des revendications 1 à 5, **caractérisé en ce que** les moyens d'articulation comprennent des moyens élastiques de rappel du moyeu d'actionnement à une position de repos.

7. Système selon l'une des revendications 1 à 6, **caractérisé en ce que** le volume utile contient un coussin gonflable fixe.

## Claims

1. Switch system located in the vicinity of a useful volume (20) contained in receiving means (32), in particular for a motor vehicle, comprising an actuating means (10) able to cover the receiving means at least partly and at least one contacting zone (40) located in the vicinity (31, 33) of the receiving means, the actuating means being designed to be able to act directly on the contacting zone, **characterized in that** the actuating means is connected to the receiving means by articulation means (11) located at the level of a first edge (14) of the actuating means, the actuating means comprises contacting means (12) able to act in the contacting zone located at the level of a second edge (13), opposite to the first one.

2. System according to Claim 1, **characterized in that** the receiving means are located in the top of a column.

3. System according to one of Claims 1 or 2, **characterized in that** the receiving means are a steering wheel hub.

4. System according to one of Claims 1 to 3, **characterized in that** the useful volume (20) is occupied by an airbag.

5. System according to one of Claims 1 to 4, **characterized in that** the articulation means is a hinge.

6. System according to one of Claims 1 to 5, **characterized in that** the articulation means comprise elastic means of returning the actuating means to a position of rest.

7. System according to one of Claims 1 to 6, **characterized in that** the useful volume contains a fixed airbag.

## Patentansprüche

1. Schaltersystem, das in der Nähe eines Nutzvolumens (20) gelegen ist, das in Aufnahmemitteln (32) enthalten ist, insbesondere für ein Kraftfahrzeug, umfassend ein Betätigungsmittel (10), das geeignet ist, wenigstens zum Teil die Aufnahmemittel abzudecken, und wenigstens eine Kontaktierungszone (40), die in der Nähe (31, 32) der Aufnahmemittel gelegen ist, wobei das Betätigungsmittel derart ausgebildet ist, dass es geeignet ist, direkt auf die Kontaktierungszone einzuwirken, **dadurch gekennzeichnet, daß** das Betätigungsmittel mit dem Aufnahmemittel durch Gelenkmittel (11) verbunden ist, die auf Höhe eines ersten Randes (14) des Betätigungsmittels gelegen sind, wobei das Betätigungsmittel Kontaktierungsmittel (12) umfaßt, die geeignet sind, in der Kontaktierungszone wirksam zu werden, die auf Höhe eines zweiten Randes (13), gegenüber dem ersten, gelegen ist.

2. System nach Anspruch 1, **dadurch gekennzeichnet, daß** die Aufnahmemittel in einem Oberteil der Steuersäule sitzen.

3. System nach einem der Ansprüche 1 oder 2, **dadurch gekennzeichnet, daß** die Aufnahmemittel eine Lenkradnabe sind.

4. System nach einem der Ansprüche 1 bis 3, **dadurch gekennzeichnet, daß** das Nutzvolumen (20) von einem aufblasbaren Kissen eingenommen wird.

5. System nach einem der Ansprüche 1 bis 4, **dadurch gekennzeichnet, daß** das Gelenkmittel ein Scharnier ist.

6. System nach einem der Ansprüche 1 bis 5, **dadurch gekennzeichnet, daß** die Gelenkmittel elastische Mittel zum Zurückstellen der Betätigungsnabe in eine Ruheposition umfassen.

7. System nach einem der Ansprüche 1 bis 6, **dadurch gekennzeichnet, daß** das Nutzvolumen ein festes, aufblasbares Kissen enthält.
